Europäisches Patentamt

European Patent Office

Office européen des brevets

(11) Veröffentlichungsnummer: **0 275 464 B1**

(12) **EUROPÄISCHE PATENTSCHRIFT**

(45) Veröffentlichungstag der Patentschrift: **19.02.92**

(21) Anmeldenummer: **87118339.8**

(22) Anmeldetag: **10.12.87**

(51) Int. Cl.⁵: **H04L 12/28**

(54) **Sende-Empfangs-Einrichtung für ein Busleitungssystem.**

(30) Priorität: **11.12.86 DE 3642382**

(43) Veröffentlichungstag der Anmeldung:
**27.07.88 Patentblatt 88/30**

(45) Bekanntmachung des Hinweises auf die
Patenterteilung:
**19.02.92 Patentblatt 92/08**

(84) Benannte Vertragsstaaten:
**AT BE CH DE ES FR GB IT LI NL SE**

(56) Entgegenhaltungen:
**EP-A- 0 132 645**
**EP-A- 0 171 555**
**US-A- 3 980 826**

**IEEE TRANSACTIONS ON CONSUMER ELEC-
TRONICS, Band CE-27, Nr. 1, Februar 1981,
Seiten 102-116, IEEE, New York, US; C.H. KA-
PLINSKY: "The D2B a one logical wire bus
for consumer applications"**

(73) Patentinhaber: **Siemens Nixdorf Informationssysteme AG
Otto-Hahn-Ring 6
W-8000 München 83(DE)**

(72) Erfinder: **Haug, Friedrich
Sch b nstrasse 61
W-8000 München 90(DE)**

(74) Vertreter: **Fuchs, Franz-Josef, Dr.-Ing. et al
Postfach 22 13 17
W-8000 München 22(DE)**

## Beschreibung

Für einen schnellen Austausch von Digitalsignalen zwischen häufig wechselnden Gegenstellen (Stationen), beispielsweise zwischen Telekommunikations-Terminals, zwischen einer Datenverarbeitung dienenden Rechnern oder auch zwischen vermittlungstechnischen Prozessoren, finden vielfach Busleitungssysteme Anwendung, in denen die jeweils angeschlossenen Stationen über Sende- und Empfangseinrichtungen einen wahlfreien Zugriff (Random Access) zu dem Busleitungssystem haben. Die dabei von einer Station ausgesendeten Digitalsignale werden auf dem Bus nach beiden Seiten hin übertragen und nach Maßgabe vorangestellter Adressen nur von der (den) durch die Adresse(n) bezeichneten Station(en) aufgenommen. Für die Regelung des Zugriffs zum Busleitungssystem hat dabei besonders das sog. CSMA/CD-(Carrier Sense Multiple Access with Collision Detection)-Verfahren Bedeutung: Bevor eine Station zu senden beginnt, horcht sie in den Bus hinein, ob dort bereits ein Übertragungsvorgang stattfindet.

Zutreffendenfalls wartet sie zunächst dessen Ende ab; dann beginnt die betreffende Station zu senden, wobei sie zunächst weiter "mithört", bis sie nach einer gewissen Zeitspanne (round trip delay time) sicher ist, daß alle anderen Stationen ihr Senden bemerken konnten. Hat in gleicher Weise eine andere Station etwa gleichzeiting zu senden begonnen, so werden beide Stationen eine Kollision ihrer Digitalsignale mit denen der jeweils anderen Station feststellen, woraufhin sie ihren Sendevorgang jeweils abbrechen, um nach einer Zufallszeitspanne damit erneut zu beginnen.

Eine einfache Methode, mit der ein Mehrfachsenden erkannt werden kann, besteht darin, daß die aktive Station das von ihr gerade abzugebende (und abgegebene) Signal mit dem an ihrer Empangseinrichtung auf dem Busleitungssystem herrschenden Signalzustand vergleicht, wobei ein Signal(zustands)unterschied dann eine Kollision anzeigt. Die Erkennung eines solchen Signal-(zustands)unterschiedes setzt voraus, daß sich auf dem Busleitungssystem der eine Signalzustand physikalisch stets gegenüber dem anderen Signalzustand (bei Binärsignalen) durchsetzt. Diese Signalpriorität muß dabei unabhängig von der Anzahl etwa gleichzeitig aktiver Sender auch bei großen Leitungslängen von mehr als 100 m für jede Station gewährleistet sein.

Diese Voraussetzung wird von heute marktüblichen Standardsendern mit zwei Differenzausgängen für ein Busleitungssystem mit zwei Signalleitern nicht erfüllt. Bei solchen Busleitungssendern, die üblicherweise in Zeiten einer Inaktivität, d.h. außerhalb der Bitzeitspannen übertragener Bits, in einen dritten, Ruhezustand (Tristate) geschaltet sind, lassen sich bei takt- oder zugriffsgesteuerten Bussystemen Gegensignalzustände, die zu Signalverfälschungen oder Senderschäden durch Überlastung führen können, in diesem Ruhezustand vermeiden. Bei einem Random-Access-Bussystem basiert die Zugriffsregelung indessen einerseits gerade darauf, daß Gegensignalzustände auftreten können, wobei andererseits aber bei Einsatz üblicher Standard-Busleitungssender solche Gegensignalzustände bei großen Leitungslängen von weit auseinanderliegenden Stationen wegen des Spannungsabfalls längs der Busleitung u.U. garnicht erkannt werden.

Keine solche Standard-Busleitungssender verwendet ein bekanntes Busleitungssystem (WO-A-84/00862) mit zwei Signalleitern, in dem im Prinzip zwei synchron miteinander geschlossene oder geöffnete Schalter, über die zwei - ungleiche - Spannungsquellen mit den zwei Signalleitern verbindbar sind, aufweisende Sendeeinrichtungen mit zwei Signalzuständen vorgesehen sind, deren einer einen Dominanzzustand im Busleitungssystem bewirkt und in deren anderem die betreffende Sendeeinrichtung die zwei Signalleiter zumindest angenähert unbelastet läßt. Dabei kann eine solche Sendeeinrichtung durch einen Spezialsender mit (innenwiderstands-)unsymmetrischen Differenzausgängen realisiert werden; alternativ dazu ist es auch möglich, die genannten Schalter durch zwei gleichzeitig leitende oder gesperrte Transistoren zu realisieren, über die zwei ungleiche Spannungsquellen mit den beiden Signalleitern verbindbar sind. Ein solches Busleitungssystem benötigt somit Bussender mit speziellen Unsymmetrien, während Standard-Differenzsender möglichst (innenwiderstands-) symmetrische Komplementärausgänge aufweisen.

Keine Standard-Busleitungssender, sondern jeweils eine mittels eines Transistorschalters ein- und ausschaltbare Konstantstromquelle aufweisende spezielle Sendeeinrichtungen sind auch in einem anderen (aus US-PS 36 71 671) bekannten Busleitungssystem mit zwei Signalleitern vorgesehen.

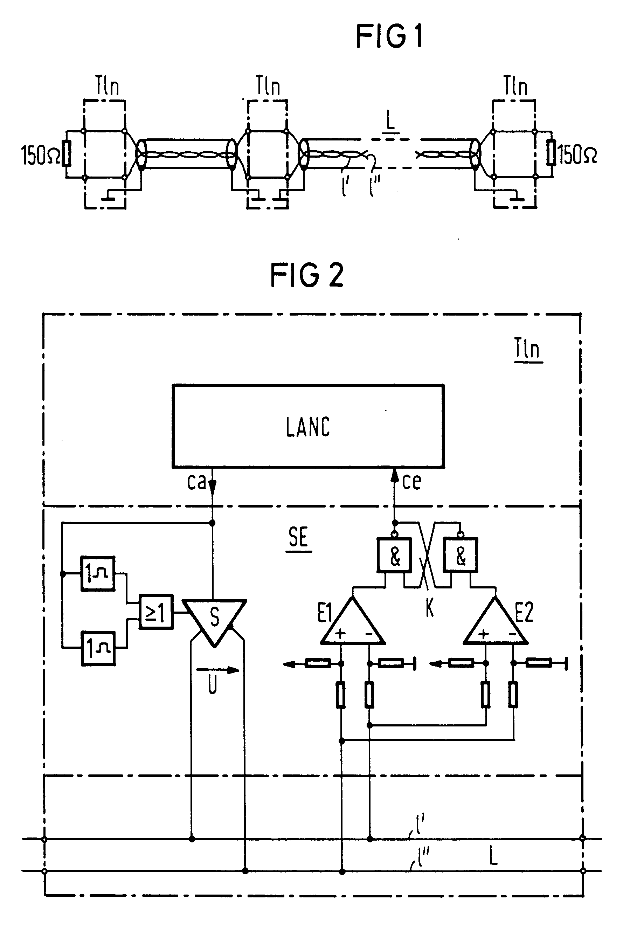

Mit nur einem einzigen Signalleiter schlechthin nicht symmetrisch ist schließlich ein (aus BYTE 6-(1981)10, 50...60, Fig. 1, bekanntes) weiteres Bussystem, in dem zwischen dem (einzigen) Ausgang jeder Sendeeinrichtung und dem (einzigen) Signalleiter eine Entkoppeldiode vorgesehen ist.

Es ist auch schon (aus EP-A1-0171555) ein Busleitungssystem mit zwei Signalleitern mit daran jeweils über zwei Differenzausgänge angeschlossenen Sendeeinrichtungen mit zwei Signalzuständen, deren einer einen Dominanzsignalzustand im Busleitungssystem bewirkt und in deren anderem die betreffende Sendeeinrichtung die beiden Signalleiter zumindest angenähert unbelastet läßt, bekannt, in dem bei den jeweils mit einem zwei Differenzausgänge aufweisenden Bussender gebildeten Sendeeinrichtungen die zwei Differenzausgänge über zwei zueinander gegensinnige, in dem genannten anderen Signalzustand im Sperrzustand befindliche Dioden mit den zwei Signalleitern verbunden sind.

Dieses Busleitungssystem, das - ohne damit eine Verwendung von Tristate-Sendern auszuschließen - auch einen Einsatz von einfachen Busleitungssendern (ohne Tristate) mit symmetrisch ausgeführten Komplementärausgängen ermöglicht, gewährleistet an sich unabhängig von der Ausdehnung des Busleitungssystems und von dem Abstand und der Anzahl etwa gleichzeitig aktiver Sender sowie unter Vermeidung einer Überlastung der Senderausgänge bei entgegengesetzten Signalzuständen einen Jeweils einheitlichen Signalzustand im Busleitungssystem und damit eine erhöhte Sicherheit in der Erkennung einer Kollision von Sendern beim gleichzeitigen Zugriff auf den Bus; das System setzt allerdings eine galvanische Ankopplung der Sende-Empfangs-Einrichtungen an die beiden Signalleiter voraus.

Eine solche galvanische Ankopplung der Sende-Empfangs-Einrichtungen an die Signalleiter eines Busleitungssystems ist indessen oftmals unerwünscht, und die Erfindung stellt sich nun die Aufgabe, eine Sende-Empfangs-Einrichtung für ein Busleitungssystem mit zwei Signalleitern anzugeben, das auch ohne eine solche galvanische Ankopplung mit einfachen Mitteln und zugleich schnell und mit hoher Sicherheit eine Kollisionserkennung beim Zugriff auf das Busleitungssystem ermöglicht.

Die Erfindung betrifft eine Sende-Empfangs-Einrichtung für ein Busleitungssystem mit zwei Signalleitern, mit einem an die Signalleiter über zwei Differenzausgänge angeschlossenen, zweier Signalzustände fähigen Differenz-Busleitungssender und einem an die Signalleiter über zwei Differenzeingänge angeschlossenen Differenz-Busleitungsempfänger; eine solche Sende-Empfangs-Einrichtung ist erfindungsgemäß dadurch gekennzeichnet, daß sendeseitig wenigstens ein nach jedem Pegelübergang der ihm zugeführten Sendedaten jeweils nur für einen Bruchteil einer Bitzeitspanne, insbesondere für etwa ein Viertel einer Bitzeitspanne, entriegelter und dabei je nach dem neuen Signalpegel einen positiven oder negativen Differenzspannungsimpuls abgebender Differenz-Busleitungssender vorgesehen ist, der sich im übrigen Teil jeder Bitzeitspanne, insbesondere für etwa drei Viertel jeder Bitzeitspanne, in einem Ruhezustand hohen Innenwiderstands (Tristate-Zustand) befindet, und/oder daß empfangsseitig zwei in zueinander entgegengesetztem Sinne an die Signalleiter angeschlossene Differenz-Busleitungsempfänger sowie ein mit seinen beiden Eingängen an die Ausgänge der beiden Differenz-Busleitungsempfänger angeschlossenes, bistabiles RS-Kippglied vorgesehen sind.

Die Erfindung bringt den Vorteil mit sich, in einem Busleitungssystem mit zwei Signalleitern, in dem standardisierte Differenz-Busleitungssender und -empfänger mit symmetrischen Komplementärausgängen bzw. -eingängen verwendet werden können, die Teilnehmerstationen auch galvanisch entkoppelt an die Busleitung anschließen zu können und ohne die Notwendigkeit einer galvanischen Ankopplung mit einfachen Mitteln eine schnelle und sichere Kollisionserkennung zu ermöglichen.

Weitere Besonderheiten der Erfindung werden aus der nachfolgenden näheren Erläuterung der Erfindung anhand der Zeichnungen ersichtlich. Dabei zeigen

FIG 1    schematisch ein Busleitungssystem mit zugehörigen Teilnehmerstationen und

FIG 2    schaltungstechnische Einzelheiten der Sende-Empfangs-Einrichtung einer solchen Teilnehmerstation;

FIG 3    verdeutlicht Signalzustände darin.

FIG 4    zeigt weitere schaltungstechnische Einzelheiten eines bevorzugten Ausführungsbeispiels einer Sende-Empfangs-Einrichtung gemäß der Erfindung.

Die Zeichnung FIG 1 zeigt schematisch ein serielles Busleitungssystem L mit zwei Signalleitern l', l" und einem Leitungsschirm (Masse, Erde); ein solches Busleitungssystem kann vorzugsweise mit einem zwei verdrallte Adern aufweisenden geschirmten (Twisted-Pair-)Kabel mit einem Wellenwiderstand von beispielsweise 150 Ohm, beispielsweise mit einem Kabel 2Y(St)Y1x2x0,5/2,2-150, realisiert sein, wobei die zwei verdrallten Adern die beiden Signalleiter l', l" bilden. An das Busleitungssystem L sind Teilnehmerstationen Tln jeweils über eine Sende-Empfangs-Einrichtung angeschlossen, wie dies aus FIG 2 näher ersichtlich ist.

Gemäß FIG 2 weist eine solche Teilnehmerstation Tln, bei der es sich beispielsweise um ein Telekommunikations-Endgerät, um einen Rechner oder um einen Vermittlungsprozessor handeln kann, eine Sende-Empfangs-Einrichtung SE mit einem von zwei Differenzausgängen her an die Signalleiter l', l" angeschlossenen Differenz-Busleitungssender S und zwei in zueinander entgegensetzem Sinne an die Signalleiter l', l" angeschlossenen Differenz-Busleitungsempfängern E1, E2 auf.

Dabei ist sendeseitig ein nach jedem Pegelübergang der ihm zugeführten Sendedaten jeweils nur für einen Bruchteil einer Bitzeitspanne entriegelter und dabei je nach dem neuen Signalpegel einen positiven oder negativen Differenzspannungsimpuls U abgebender Differenz-Busleitungssender S vorgesehen. Ein solcher Differenz-Busleitungssender S kann mit einem neben zwei Signalzuständen auch noch einen Ruhezustand als dritten Zustand aufweisenden Tristate-Bussender eines Bussender-Bausteins beispielsweise des Typs SN74ALS1631 (TI) realisiert sein, der an seinem Entriegelungseingang nach jedem Pegelübergang der am Sendedaten-Eingang des Differenz-Busleitungssenders S anliegenden Sendedaten mit einem jeweils nur einen Bruchteil einer Bitzeitspanne andauernden Entriegelungsimpuls beaufschlagt wird; solche Entriegelungsimpulse können dabei aus den Sendedaten beispielsweise mit Hilfe zweier bei einem Pegelübergang des einen bzw. des anderen Vorzeichens aktivierter monostabiler Kippglieder etwa des Typs 74LS123 abgeleitet werden, wie dies auch in FIG 2 angedeutet ist.

Die beiden eingangsseitig in zueinander entgegengesetztem Sinne an die Signalleiter l', l'' des Busleitungssystems L angeschlossenen Differenz-Busleitungsempfänger E1, E2 (beispielsweise des Typs SN75173) sind ausgangsseitig an den S- bzw. R-Eingang eines bistabilen RS-Kippgliedes K angeschlossen, das gemäß FIG 2 mit zwei kreuzgekoppelten NAND-Gliedern beispielsweise des Typs SN74ALS00 realisiert sein kann. Mit dem Ausgang des RS-Kippgliedes K ist der Empfangsdaten-Eingang ce eines LAN-Controllers LANC (beispielsweise des Typs 82588) verbunden, dessen Sendedaten-Ausgang ca zum Sendedaten-Eingang des differenz-Busleitungssenders S führt.

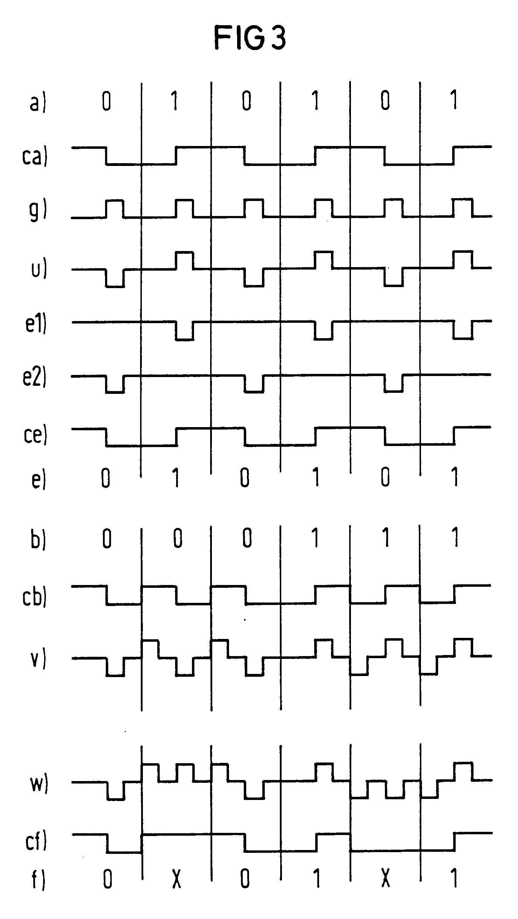

Nach jedem Pegelübergang der vom Ausgang ca des LAN-Controllers LANC kommenden Sendedaten, wie sie beispielsweise, von einer in FIG 3.a) angegebenen Bitfolge ausgehend, in Fig 3.ca) angedeutet sind, wird von dem einen oder dem anderen monostabilen Kippglied her der Entriegelungseingang des Differenz-Busleitungssenders S mit einem Entriegelungsimpuls von - bei Bitzeitspannen von z.B. 1 $\mu$s - etwa 250 ns Dauer beaufschlagt, wobei FIG 3.g) eine Folge solcher Entriegelungsimpulse erkennen läßt. Auf ihm am Sendedaten-Eingang zugeführte, im Beispiel Manchesterkodiert vorliegende Sendedaten gemäß Fig 3.ca) erzeugt der Differenz-Busleitungssender S dann entsprechende positive bzw. negative Differenzspannungsimpulse u (s. FIG 2), wie sie in FIG 3.u) dargestellt sind. In jeder Teilnehmerstation Tln (in FIG 1) des Busleitungssystems werden empfangsseitig die Differenzspannungsimpulse je nach ihrem jeweiligen Vorzeichen von dem einen bzw. dem anderen Differenz-Busleitungsempfänger (E1 bzw. E2 in FIG 2) aufgenommen, wie dies in FIG 3.e1) und FIG 3.e2) angedeutet ist; das durch die Ausgangssignale der beiden Differenz-Busleitungsempfänger E1, E2 gesetzte bzw. rückgesetzte, RS-Kippglied restituiert daraus wieder die ursprüngliche Datenform, wie dies aus FIG 3.ce) und FIG 3.e) ersichtlich wird.

Zwischen zwei aufeinanderfolgenden Differenzspannungsimpulsen u (in FIG 3.u) ist der Differenz-Busleitungssender S (in FIG 2) einer Teilnehmerstation Tln (in FIG 1 und FIG 2) in seinem Ruhezustand hohen Innenwiderstands, wobei dieser Ruhezustand in Abhängigkeit von der Gleichheit oder Ungleichheit aufeinanderfolgender Bits im Beispiel etwa 250 ns oder 750 ns andauert. Treten nun in einem Kollisionsfall in diesen Impulslücken der Sendeeinrichtung S (in FIG 2) einer gerade betrachteten Teilnehmerstation Tln (in FIG 2) in entsprechender Weise von einer anderen Teilnehmerstation Tln (in FIG 1) ausgesendete Differenzspannungsimpulse auf dem Busleitungssystem L auf, so werden auch diese Differenzspannungsimpulse von dem einen oder anderen Differenz-Busleitungsempfänger E1, E2 (in FIG 2) der gerade betrachteten Teilnehmerstation Tln (in FIG 2) aufgenommen mit der Folge, daß die RS-Kippstufe K zusätzliche Setz- bzw. Rücksetzimpulse erhält, so daß es am Empfangsdaten-Eingang ce) des LAN-Controllers LANC zu Verfälschungen der Daten kommt; so treten beispielsweise bei im Manchester-Code dargestellten Daten Bitzellen auf, bei denen der für den Manchester-Code signifikante Pegelübergang in der Bitzellenmitte fehlt:

Es sei angenommen, daß gleichzeitig damit, daß die gerade betrachtete Teilnehmerstation (Tln in FIG 2) die in FIG 3.a) und FIG 3.ca) angegebene Bitfolge in das Busleitungssystem L einspeist, auch eine andere Teilnehmerstation (Tln in FIG 1) auf das Busleitungssystem L zugreift und in dieses eine andere Bitfolge einspeist, wie sie beispielsweise in FIG 3.b) und FIG 3.cb) angegeben sein möge. Diese andere Teilnehmerstation beaufschlagt demzufolge das Busleitungssystem mit einer entsprechenden anderen Differenzspannungsimpulsfolge, wie sie im Beispiel in FIG 3.v) skizziert ist. An den beiden Differenz-Leitungsempfängern E1, E2 der bisher schon betrachteten Teilnehmerstation Tln (in FIG 2) wirkt sich dann im Ergebnis eine durch Überlagerung der Differenzspannungsimpulsfolgen der beiden in Kollision miteinander auf das Busleitungssystem L zugreifenden Teilnehmerstationen bedingte Differenzspannungsimpulsfolge aus, wie sie in Fig 3.w) angedeutet ist, wobei die Darstellung in FIG 3 insgesamt von einer bei der betrachteten Teilnehmerstation gegebenen Zeitgleichheit der Bitzellen beider Teilnehmerstationen ausgeht. Am Ausgang der den beiden Differenz-Leitungsempfängern E1, E2 nachgeschalteten bistabilen Kippstufe K tritt daher ein Signal auf, wie es in FIG 3.cf) skizziert ist, und damit eine Bitfolge, wie sie in FIG 3.f) angegeben ist; dabei sind in FIG 3.f) mit X kollisionsbedingt verfälschte Bitzellen bezeichnet, anhand derer somit die Kollision gleichzeitig auf das Busleitungssystem L zugreifender Teilnehmerstationen Tln (in Fig 1) erkennbar ist.

Es sei noch bemerkt, daß es in Abweichung von dem anhand von FIG 2 beschriebenen Ausführungsbeispiel einer Sende-Empfangs-Einrichtung mit gerade einem Differenz-Busleitungssender S auch möglich ist, einem solchen Differenz-Busleitungssender wenigstens einen weiteren derartigen Differenz-Busleitungssender parallel zu schalten, um so den sendeseitig wirksamen Innenwiderstand entsprechend herabzusetzen.

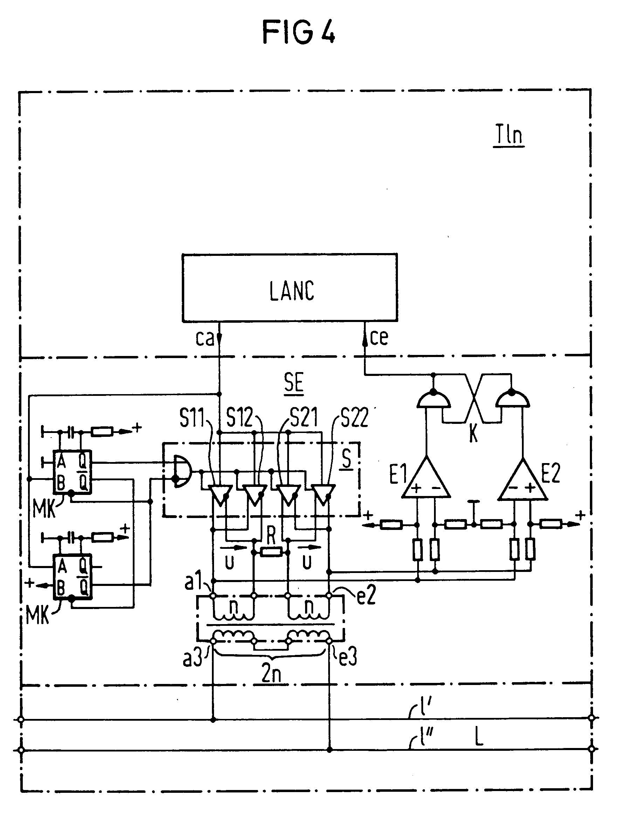

Eine solche Parallelschaltung wird auch aus FIG 4 ersichtlich, die ein anderes Ausführungsbeispiel einer Sende-Empfangs-Einrichtung gemäß der Erfindung in weiteren schaltungstechnischen Einzelheiten zeigt. Gemäß FIG 4 weist eine Teilnehmerstation Tln eine wiederum mit zwei eingangsseitig gegensinnig einander parallelgeschalteten Differenz-Busleitungsempfängern E1, E2 versehene Sende-Empfangs-Einrichtung SE mit zwei einander eingangs- und ausgangsseitig parallelgeschalteten ersten Differenz-Busleitungssendern S11, S12 und zwei einander eingangs- und ausgangsseitig parallelgeschalteten zweiten Differenz-Busleitungssendern S21, S22 und einem Übertrager Ü auf, der eine in zwei zumindest angenähert gleiche Teile unterteilte Primärwicklung n-n und eine mit der Primärwicklung n-n zumindest angenähert windungszahlgleiche, mit ihren beiden Enden a3, e3 an den beiden Signalleitern l', l" liegende Sekundärwicklung 2n besitzt. Dabei sind die beiden Enden a1, e1 der ersten Primärwicklungshälfte an die beiden Differenzausgänge der zwei ersten Differenz-Busleitungssender S11, S12 angeschlossen, und die beiden Enden a2, e2 der zweiten Primärwicklungshälfte sind an die beiden Differenzausgänge der zwei zweiten Differenz-Busleitungssender S21, S22 angeschlossen. Die beiden einander abgewandten Enden a1, e2 der beiden Primärwicklungshälften führen zu den Busleitungsempfängern E1, E2; zwischen die beiden einander zugewandten Enden e1, a2 der beiden Primärwicklungshälften ist ein Widerstand R eingefügt, dessen Widerstandswert groß gegenüber dem Busleitungssender-Ausgangswiderstand und klein gegenüber dem Busleitungsempfänger-Eingangswiderstand ist.

Durch das angegebene Widerstandsverhältnis von Widerstand R und Busleitungssender-Ausgangswiderstand wird erreicht, daß die von den an die beiden Primärwicklungshälften angeschlossenen Differenz-Busleitungssendern abgegebenen Sendespannungen u jeweil primärwicklungshälftenindividuell, d.h. gewissermaßen parallel, zur Sekundärseite des Übertragers Ü hin übertragen und somit mit - dem Übersetzungsverhältnis n:2n entsprechend - verdoppelter Spannungsamplitude in das Busleitungssystem L eingekoppelt werden; die so in Senderichtung gegebene Parallelwirkung der beiden Primärwicklungshälften und der daran angeschlossenen Differenz-Busleitungssender bringt zugleich eine Halbierung des sendeseitig wirksamen Innenwiderstand mit sich. Wenn dann, wie dies auch in FIG 4 dargestellt ist, gerade zwei einander parallel geschaltete Differenz-Busleitungssender S11, S12 bzw. S21, S22 je Primärwicklungshälfte vorgesehen sind, wird eine nochmalige Halbierung des sendeseitig wirksamen Innenwiderstands bewirkt, so daß damit die mit dem Quadrat des Übersetzungsverhältnisses 2n:n bewirkte Transformierung des Busleitungs-Lastwiderstandes von der Sekundärseite des Übertragers Ü auf dessen Primärseite gerade ausgeglichen wird. Dabei erfordern die insgesamt vier Differenz-Busleitungssender S11, S12, S21, S22 praktisch keinen Mehraufwands, da handelsübliche Busleitungssender-Bausteine, etwa des Typs SN74ALS1631, ohnehin vier solche Busleitungssender enthalten.

In der umgekehrten Übertragungsrichtung (Empfangsrichtung) wird durch das angegebene Widerstandsverhältnis von Widerstand R und Busleitungsempfänger-Eingangswiderstand erreicht, das die beiden Primärwicklungshälften in ihrer eigentlichen Serienschaltung zur Wirkung kommen und die auf den Signalleitern l', l" des Busleitungssystems L ankommenden Signalspannungen mit dem Übersetzungsverhältnis 1:1 zu den Busleitungsempfängern E1, E2 hin übertragen werden. Da somit im Ergebnis die in Senderichtung erzielte Spannungsverdopplung nicht durch eine Spannungshalbierung in Empfangsrichtung wieder rückgängig gemacht wird, kann auch bei einem mit z. B. 300 m Kabellänge relativ ausgedehnten und dabei durch z. B. 16 Teilnehmerstationen belasteten Busleitungssystem sichergestellt werden, daß jeder Empfänger die Signalspannungen noch mit einer ein sicheres Ansprechen ermöglichenden Amplitude empfängt.

Die einzelnen Differenz-Busleitungssender S11, S12, S21, S22 mögen wiederum nach jedem Pegelübergang der zugeführten Sendedaten jeweils nur für einen Bruchteil einer Bitzeitspanne entriegelt werden, wobei sie je nach dem neuen Signalzustand einen positiven oder negativen Differenz-Spannungsimpuls u abgeben. Die Differenz-Busleitungssender können dazu, wie dies auch oben zu FIG 2 bereits erwähnt wurde, mit neben zwei Signalzuständen auch noch einen Ruhezustand als dritten Zustand aufweisenden Tristate-Busleitungssendern eines Busleitungssender-Bausteins S beispielsweise des Typs SN74ALS1631 realisiert sein, die an ihren Entriegelungseingängen nach jedem Pegelübergang der am Sendedaten-Eingang der Differenz-Busleitungssender anliegenden Sendedaten mit einem jeweils nur einen Bruchteil einer Bitzeitspanne andauernden Entriegelungsimpuls beaufschlagt werden; solche Entriegelungsimpulse können dabei aus den Sendedaten beispielsweise mit Hilfe zweier bei einem Pegelübergang des einen bzw. des anderen Vorzeichens aktivierter monostabiler Kippglieder etwa des Typs 74LS123 abgeleitet werden, wie sie in FIG 4 mit MK bezeichnet sind.

Empfangsseitig sind wiederum, wie dies ebenfalls in FIG 4 weiter ins einzelne gehend dargestellt ist, zwei in zueinander entgesetztem Sinne an der Übertrager Ü und über diesen an die Signalleiter l', l″ des Busleitungssystems L angeschlossene Differenz-Busleitungsempfänger E1, E2 (beispielsweise des Typs SN75173) vorgesehen, die ausgangsseitig an den S- bzw. R-Eingang eines bistabilen RS-Kippgliedes K angeschlossen sind, das auch gemäß FIG 4 mit zwei kreuzgekoppelten NAND-Gliedern beispielsweise des Typs SN74ALS00 realisiert ist. Mit dem Ausgangs des RS-Kippgliedes K ist auch in der in FIG 4 skizzierten Teilnehmerstation Tln der Empfangsdaten-Eingang ce eines LAN-Controllers LANC (beispielsweise des Typs 82588) verbunden, dessen Sendedaten-Ausgang ca zum Sendedaten-Eingang der Differenz-Busleitungssender S11, S12, S21, S22 führt.

**Patentansprüche**

1. Sende-Empfangs-Einrichtung (SE) für ein Busleitungssystem (L) mit zwei Signalleitern (l', l″), mit einem an die Signalleiter (l', l″) über zwei Differenzausgänge angeschlossenen, zweier Signalzustände fähigen Differenz-Busleitungssender (S) und einem an die Signalleiter über zwei Differenzeingänge angeschlossenen Differenz-Busleitungsempfänger (E),
**dadurch gekennzeichnet,**
daß sendeseitig wenigstens ein nach jedem Pegelübergang der ihm zugeführten Sendedaten jeweils nur für einen Bruchteil einer Bitzeitspanne entriegelter und dabei je nach dem neuen Signalpegel einen positiven oder negativen Differenzspannungsimpuls abgebender Differenz-Busleitungssender (S) vorgesehen ist, der sich im übrigen Teil jeder Bitzeitspanne in einem Ruhezustand hohen Innenwiderstands (Tristate-Zustand) befindet, und/oder daß empfangsseitig zwei in zueinander entgegengesetztem Sinne an die Signalleiter (l', l″) angeschlossene Differenz-Busleitungsempfänger (E1, E2) sowie ein mit seinen beiden Eingängen an die Ausgänge der beiden Differenz-Busleitungsempfänger (E1, E2) angeschlossenes, bistabiles RS-Kippglied (K) vorgesehen sind.

2. Sende-Empfangs-Einrichtung nach Anspruch 1,
**dadurch gekennzeichnet,**
daß ein jeweils nur für etwa ein Viertel einer Bitzeitspanne entriegelter und einen positiven oder negativen Differenzspannungsimpuls abgebender und für etwa drei Viertel einer Bitzeitspanne in seinem Ruhezustand hohen Innenwiderstands (Tristate-Zustand) befindlicher Differenz-Busleitungssender (S) vorgesehen ist.

3. Sende-Empfangs-Einrichtung nach Anspruch 1 oder 2,
**dadurch gekennzeichnet,**
daß der Sendedaten-Eingang des Differenz-Busleitungssenders (S) mit dem Sendedaten-Ausgang (ca) und der Ausgang des RS-Kippgliedes (K) mit dem Empfangsdaten-Eingang (ce) eines LAN-Controllers (LANC) verbunden ist.

4. Sende-Empfangs-Einrichtung nach einem der vorhergehenden Ansprüche,
**dadurch gekennzeichnet,**
daß ein Übertrager (Ü) mit einer in zwei zumindest angenähert gleiche Teile unterteilten Primärwicklung (n - n) und einer mit der Primärwicklung (n - n) zumindest angenähert windungszahlgleichen, mit ihren beiden Enden (a3, e3) an den beiden Signalleitern (l', l″) liegenden Sekundärwicklung (2n) vorgesehen ist, bei dem die beiden Enden (a1, e1) der ersten Primärwicklungshälfte (n) an die beiden Differenzausgänge wenigstens eines ersten Differenz-Busleitungssenders (S11, S12) angeschlossen sind, bei dem die beiden Enden (a2, e2) der zweiten Primärwicklungshälfte (n) an die beiden Differenzausgänge wenigstens eines dem ersten Differenz-Busleitungssender (S11, S12) eingangsseitig parallelgeschalteten zweiten Differenz-Busleitungssenders (S21, S22) angeschlossen sind, bei dem die beiden einander abgewandten Enden (a1, e2) der beiden Primärwicklungshälften zu wenigsten einem Differenz-Busleitungsempfänger (E1, E2) führen und bei dem zwischen die beiden einander zugewandten Enden (e1, a2) der beiden Primärwicklungshälften ein Widerstand (R) eingefügt ist, dessen Widerstandswert groß gegenüber dem Busleitungssender-Ausgangswiderstand und klein gegenüber dem Busleitungsempfänger-Eingangswiderstand ist.

5. Sende-Empfangs-Einrichtung nach Anspruch 4,
**dadurch gekennzeichnet,**
daß zwei einander eingangs- und ausgangsseitig parallelgeschaltete erste Differenz-Busleitungssender (S11, S12) und zwei einander eingangs- und ausgangsseitig parallelgeschaltete zweite Differenz-Busleitungssender (S21, S22) vorgesehen sind.

## Claims

1. Transmitter-receiver device (SE) for a bus system (L) with two signal conductors (1', 1"), having a differential bus transmitter (S) which is connected to the signal conductors (1', 1") via two differential outputs and is capable of two signal states, and a differential bus receiver (E) which is connected to the signal conductors via two differential inputs, characterised in that there is provided at the transmitting end at least one differential bus transmitter (S) which is unlocked after each level transition of the transmission data supplied to it in each case for only a fraction of a bit period and thereby outputs a positive or negative differential voltage pulse depending on the new signal level, and which assumes in the remaining part of each bit period a quiescent state with a high internal resistance (tri-state condition), and/or in that there are provided at the receiving end two differential bus receivers (E1, E2) connected to the signal conductors (1', 1") in a mutually opposite manner, as well as a bistable RS flip-flop (K) connected with its two inputs to the outputs of the two differential bus receivers (E1, E2).

2. Transmitter-receiver device according to Claim 1, characterised in that there is provided a differential bus transmitter (S) which is unlocked in each case only for approximately one quarter of a bit period and outputs a positive or negative differential voltage pulse, and assumes for approximately three quarters of a bit period its quiescent state with a high internal resistance (tri-state condition).

3. Transmitter-receiver device according to Claim 1 or 2, characterised in that the transmission data input of the differential bus transmitter (S) is connected to the transmission data output (ca), and the output of the RS flip-flop (K) is connected to the reception data input (ce) of a LAN controller (LANC).

4. Transmitter-receiver device according to one of the preceding claims, characterised in that there is provided a transformer (Ü) having a primary winding (n - n) subdivided into two at least approximately equal parts, and a secondary winding (2n) having at least approximately the same number of turns as the primary winding (n - n), the two ends (a3, e3) of which secondary winding are connected to the two signal conductors (1', 1"), in which the two ends (a1, e1) of the first primary winding half (n) are connected to the two differential outputs of at least one first differential bus transmitter (S11, S12), in which the two ends (a2, e2) of the second primary winding half (n) are connected to the two differential outputs of at least one second differential bus transmitter (S21, S22) connected in parallel with the first differential bus transmitter (S11, S12) on the input side, in which the two mutually remote ends (a1, e2) of the two primary winding halves lead to at least one differential bus receiver (E1, E2), and in which there is inserted between the two mutually facing ends (e1, a2) of the two primary winding halves a resistor (R), the resistance value of which is high in comparison with the bus transmitter output resistance and low in comparison with the bus receiver input resistance.

5. Transmitter-receiver device according to Claim 4, characterised in that there are provided two first differential bus transmitters (S11, S12) connected parallel to one another on the input and output sides, and two second differential bus transmitters (S21, S22) connected parallel to one another on the input and output sides.

## Revendications

1. Dispositif d'émission-réception (SE) pour un système de lignes formant bus (L) comportant deux conducteurs de transmission de signaux (1',1"), un émetteur de lignes de bus de différence (S) raccordé aux conducteurs de transmission de signaux (1',1") par l'intermédiaire de deux sorties différentielles et pouvant transmettre deux états de signaux, et un récepteur de lignes de bus de différence (E) raccordé aux conducteurs de signaux par l'intermédiaire de deux entrées différentielles, caractérisé par le fait qu'il est prévu, côté émission, au moins un émetteur de lignes de bus de différence (S), qui est déverrouillé uniquement pendant une fraction d'un intervalle de temps d'un bit après la transition de niveau des données d'émission qui lui sont envoyées, et délivre une impulsion de tension différentielle positive ou négative après le nouveau niveau de signal et est situé, pendant le reste de chaque intervalle de temps d'un bit, dans un état de repos, dans lequel il présente une résistance interne élevée (état Tristate) et/ou qu'il est prévu, côté réception, deux récepteurs de lignes de bus de différence (E1,E2) raccordés aux conducteurs de transmission de signaux (1',1") en des sens réciproquement opposés, et un circuit à bascule bistable de type RS (K), raccordé par ses deux entrées aux sorties des deux récepteurs de lignes de bus de différence (E1,E2).

2. Dispositif d'émission-réception suivant la revendication 1, caractérisé par le fait qu il est prévu un émetteur de lignes de bus de différence (S) déverrouillé respectivement uniquement pendant approximativement un quart d'un intervalle de temps d'un bit et délivre une impulsion de tension différentielle positive ou négative et est situé pendant environ les trois quarts d'un intervalle de temps d'un bit dans son état de repos dans lequel il présente une résistance interne élevée (état Tristate).

3. Dispositif d'émission-réception suivant la revendication 1 ou 2, caractérisé par le fait que l'entrée des données d'émission de l'émetteur de lignes de bus de différence (S) est raccordée à la sortie de données d'émission (ca) et que la sortie du circuit à bascule de type RS (K) est raccordée à l'entrée (ce) des données de réception d'un contrôleur LAN (LANC).

4. Dispositif d'émission-réception suivant l'une des revendications précédentes, caractérisé par le fait qu'un transformateur (Ü) possédant un enroulement primaire (n-n) subdivisé en deux parties au moins approximativement identiques, et un enroulement secondaire (2n) possédant au moins approximativement le même nombre de spires que l'enroulement primaire (n-n) et raccordé par ses deux extrémités (a3,e3) aux deux transistors de transmission de signaux (1',1"), et dans lequel les deux extrémités (a1,e1) de la première moitié (n) de l'enroulement primaire sont raccordées aux deux sorties différentielles d'au moins un premier émetteur de lignes de bus de différence (S11,S12), et dans lequel les deux extrémités (e1,a2) de la seconde moitié (n) de l'enroulement primaire sont raccordées aux deux sorties différentielles d'au moins un second émetteur de lignes de bus de différence (S21,S22) branchées en parallèle, côté entrée, avec le premier émetteur de lignes de bus de différence (S11,S12), et dans lequel les deux extrémités (a1,e2), situées à l'opposé l'une de l'autre, des deux moitiés de l'enroulement primaire sont raccordées à au moins un amplificateur de lignes de bus de différence (E1,E2), et dans lequel entre les deux extrémités (e1,a2), tournées l'une vers l'autre, des deux moitiés de l'enroulement primaire est insérée une résistance (R), dont la valeur résistive est élevée par rapport à la résistance de sortie de l'émetteur de lignes de bus et faible par rapport à la résistance d'entrée du récepteur de lignes de bus.

5. Dispositif d'émission-réception suivant la revendication 4, caractérisé par le fait qu'il est prévu deux premiers émetteurs de lignes de bus de différence (S11,S12), branchés en parallèle côté entrée et côté sortie, et deux seconds émetteurs de lignes de bus de différence (S21,S22) branchés en parallèle côté entrée et côté sortie.

# FIG 1

# FIG 2

# FIG 3

# FIG 4